# EUROPÄISCHE PATENTSCHRIFT

(11) **EP 0 407 876 B1**
(45) Veröffentlichungstag und Bekanntmachung des Hinweises auf die Patenterteilung: **24.02.1993**
(21) Anmeldenummer: 90112750.6
(22) Anmeldetag: 04.07.1990
(51) Int. Cl.: B29B 13/06, F26B 21/14, F26B 17/14

(54) **Verfahren und Vorrichtung zum Trocknen und Tempern von Polyamidgranulat**
Method of and apparatus for drying and heating of polyamide granules
Procédé et dispositif pour le séchage et le traitement thermique de granulés de polyamide

(30) Priorität: 13.07.1989 DE 3923061
(43) Veröffentlichungstag der Anmeldung: 16.01.1991
(73) Patentinhaber: BASF Aktiengesellschaft, 67063 Ludwigshafen (DE)
(72) Erfinder: Tischendorf, Klaus Juergen, Dr., D-6719 Weisenheim (DE); Liebscher, Manfred, Dr., D-6520 Worms 24 (DE); Rizk, Farid, Prof. Dr., D-6708 Neuhofen (DE); Zahradnik, Franz, Dr., D-6700 Ludwigshfafen (DE)

(56) Entgegenhaltungen:
- DE-A- 2 052 334
- DE-A- 2 530 304
- FR-A- 1 011 448
- GB-A- 1 139 224
- US-A- 2 941 310
- US-A- 3 112 188
- US-A- 3 266 165
- US-A- 3 325 913

## Beschreibung

Die Erfindung betrifft ein Verfahren nach dem Oberbegriff des Patentanspruchs 1 sowie eine Vorrichtung nach dem Oberbegriff des Patentanspruchs 3.

Zur Darstellung der Erfindungs-Gattung ist im Oberbegriff des Anspruchs 1 von einem bekannten Verfahren im Sinne der DE-AS 25 30 304 ausgegangen, nach dem Polyamidgranulat aus einer Aufschlämmung in Wasser in einem Verfahrensschritt von Wasser befreit wird. Trocknen und Tempern des Granulats finden nacheinander in übereinander angeordneten Zonen eines Schachttrockners mit Hilfe eines im Gegenstrom geführten Inertgasstromes einer Temperatur von 70 bis 200°C statt. Als Tempern wird das Anheben des Molekulargewichts von Polyamid-6 durch Nachkondensation in fester Phase bezeichnet. Das Granulat gelangt unter Schwerkrafteinwirkung langsam von oben nach unten durch die Trocknungs-und Temperzone sowie durch einen Wärmetauscher und wird über einen waagerecht verschiebbaren Rost ausgetragen. Durch den im Schachttrockner integrierten Wärmetauscher und den Schieberost mit absatzweisem Granulataustrag sind die Durchsatzleistungen indes begrenzt und es lassen sich infolge ungleichmäßiger Inertgasverteilung unterschiedliche Produktqualitäten nicht immer vermeiden. Darüber hinaus erfordert das Verfahren bezogen auf die ausgetragene Granulatmenge einen vergleichsweise hohen Inertgasdurchsatz.

Weiterhin wird in der US-PS 3 266 165 ein Verfahren zur Trocknung von Polyamidgranulat beschrieben, bei dem man zunächst Wasser in einer Zentrifuge abtrennt und das Granulat in einem Schachttrockner mit Inertgas im Gegenstrom trocknet. Abgesehen davon, daß Polyamidgranulat von dessen Zerkleinerung herrührend bereits staubförmige Anteile enthält, werden diese durch die mechanische Beanspruchung in einer Zentrifuge noch vergrößert. Beim Trocknen werden die staubförmigen Anteile durch das Inertgas ausgetragen und verstopfen die Filter. Schließlich bedarf es auch eines zusätzlichen Aufwandes, um das Eindringen von Sauerstoff beim Zentrifugieren zu vermeiden.

Mit der Erfindung soll eine Möglichkeit zum kontinuierlichen Trocknen und Tempern von weitgehend staubfreiem Polyamidgranulat geschaffen werden, wobei eine in engen Grenzen gleiche Restfeuchte und gleiche mittlere Molmasse des Produktes durch Nachkondensation in fester Phase bei geringen Verweilzeiten gewährleistet sind.

Diese Aufgabe wird bei einem Verfahren nach dem Kennzeichen des Anspruchs 1 und bei einer Vorrichtung nach dem Kennzeichen des Anspruchs 3 gelöst.

Bei dem erfindungsgemäßen Verfahren wird extrahiertes Polyamidgranulat mit Temperaturen von 90°C bis 110°C hydraulisch mit 3 bis 12 kg Wasser/kg Polymer gefördert, von der Hauptmenge des Wassers getrennt und in einen Schachttrockner transportiert. Der Schachttrockner enthält eine Trocknungszone und eine Temperzone. Die Trennung des Granulats von der Hauptmenge des Wassers erfolgt mit Hilfe eines oberhalb des Schachttrockners angeordneten Siebrohres. Es ergeben sich dann Feuchtigkeitsgehalte des Granulats von ca. 0,1 bis 0,5 kg Wasser/kg Polymer.

Anschließend wird das Granulat auf einem horizontal drehbaren Siebring im Schachttrockner als Schicht abgelagert und mit Inertgas, im allgemeinen Stickstoff, durchströmt. Das nun weniger als 0,17 kg Wasser/kg Polymer enthaltende Granulat wird abgestreift und in die Trocknungszone, in der sich ein Schüttkegel ausbildet, übergeführt. Die Höhe der Granulatschüttung in der Trocknungszone wird durch entsprechende Steuerung der Austragsleistung am unteren Ende des Schachttrockners konstant gehalten. Das Granulat gelangt in einer Pfropfenströmung bei Geschwindigkeiten von weniger als 0,5 m/h durch die Trocknungszone und durch die sich anschließende Temperzone. Für den Schachttrockner, d.h. für die gesamte Behandlungszone haben sich Höhen/Durchmesserverhältnisse von 6 bis 15 insgesamt als zweckmäßig erwiesen. Die Temperzone endet in einem Auslaufkonus mit Verdrängerkegel am unteren Ende des Schachttrockners. Durch diese Anordnung wird eine weitgehend gleiche Verweilzeit aller Granulatteilchen im Schachttrockner erreicht, so daß z.B. die Viskositätszahl von Polyamid 6-Produkten durch Tempern von 110 auf mehr als 300 erhöht werden kann (Viskositätszahl bezogen auf Polymer-Schwefelsäurelösung mit 0,5 g Polyamid 6/dl Säure (96 %) entsprechend DIN 53727).

Zwischen der Trocknungszone und der Temperzone, d.h. etwa unterhalb eines Abstandes vom 1- bis 1,5-fachen Durchmesser des Schachttrockners von der Schüttgutoberfläche wird Inertgas einer Temperatur von 70 bis 200°C, vorzugsweise 90 bis 150°C, mit Geschwindigkeiten von 2 bis 20 m/sec in die Granulatschicht eingeleitet, wobei eine Teilung des Inertgasstromes erfolgt, derart, daß ein erster Teilstrom an mehreren Stellen des Mantels des Schachttrockners radial nach innen in die Granulatschicht geleitet wird, und daß ein zweiter Teilstrom in das Zentrum der Schüttung geführt und von dort radial nach außen und nach innen geleitet wird. Das Inertgas steigt in der Granulatschicht mit einer Geschwindigkeit von weniger als 1 m/sec nach oben, wird gleichmäßig verteilt und ermöglicht somit gleichmäßige Wärme-und Stoffaustauschvorgänge. Auf diese Weise läßt sich das Granulat bis auf 0,0001 kg Wasser/kg Polymer trocknen.

Im wesentlichen hängt die Trocknung von den Massenströmen von Granulat und Inertgas, den jeweiligen Temperaturen am Ein- und Austritt sowie den Wassergehalten des Granulats bzw. den relativen Feuchten des Inertgases ab. Restfeuchten von weniger als 0,05% im Polyamid werden im Gleichgewicht zwischen Feststoff und Gasphase mit relativen Feuchtigkeiten im Inertgas unter 1% erreicht. Die relative Feuchtigkeit im Inertgas wird durch Austauen von Wasser und Aufheizen des Gases bei konstantem Druck eingestellt. Relative Feuchtigkeiten unter 1% erfordern, daß das Inertgas mit Temperaturen von über 150°C auf Temperaturen von wenigstens 30°C abgekühlt werden muß.

Die Eintrittstemperatur des Stickstoffes unterhalb der Trocknungszone wird im allgemeinen in Abhängigkeit von der gewünschten Nachkondensation im unteren Teil der Behandlungszone festgelegt. Die Temperatur in der Temperzone wird entsprechend der Temperatur des eintretenden Stickstoffs konstant gehalten. Der erzielbare Polykondensationsgrad wird beim Tempern umso schneller erreicht, je höher die Temperatur und je niedriger der Wassergehalt im Granulat sind. Die Temperung von extrahiertem Polyamid-6-Granulat mit Viskositätszahl 110 auf höhere Molmassen mit z.B. Viskositätszahlen über 300 erfordert im allgemeinen Verweilzeiten von 20 bis 60 h bei Temperaturen von 140 bis 190°C und Feuchtigkeitsgehalten im Granulat unter 0,05 %. Dabei werden zum Trocknen 4 bis 7 kg Stickstoff/kg trockenes Polymer bei Überdrücken bis zu 0,4 bar eingesetzt.

Um möglichst gleichmäßige Produkteigenschaften zu erhalten, muß die Temperzeit bzw. die Sinkgeschwindigkeit des Granulates möglichst einheitlich sein. Die Sinkgeschwindigkeiten betragen im allgemeinen 0,3 bis 0,6 m/h. Dabei werden verfahrensgemäß relative Geschwindigkeitsunterschiede ΔW* = (Wₘₐₓ-Wₘᵢₙ)/(Wₘᵢₜₜₑₗ) x 100 kleiner als 4 % und Produkte mit Viskositätszahlen im spezifizierten Toleranzbereich erreicht. Diese einheitlichen Daten werden durch einen an die Behandlungszone anschließenden unteren, konisch verjüngten Bereich des Schachttrockners erreicht.

In diesem Bereich wird erfindungsgemäß ein weiterer Inertgasstrom von 0,05 bis 0,5 kg Gas/kg Polymer eingeleitet.

Die relative Feuchtigkeit dieses Gasstromes kann auch kleiner sein, als das in der Trocknungszone zugeführte Kreisgas, so daß zusätzlich in der unteren Temperzone noch der Rest-Wassergehalt des Endproduktes eingestellt werden kann.

Nach einem weiteren Merkmal der Erfindung wird das Granulat nach dem Austrag aus dem Schachttrockner in einem Wirbelbett mittels Luft auf eine Temperatur <50°C gekühlt. Dabei wird das Wirbelbett mit etwa 2 bis 8 m³/(m²s) gefilterter Luft durchströmt. Der Druck im Wirbelbett ist niedriger als im Schachttrockner. Die Verweilzeit des Granulats im Wirbelbett beträgt etwa 1,5 bis 3 min.

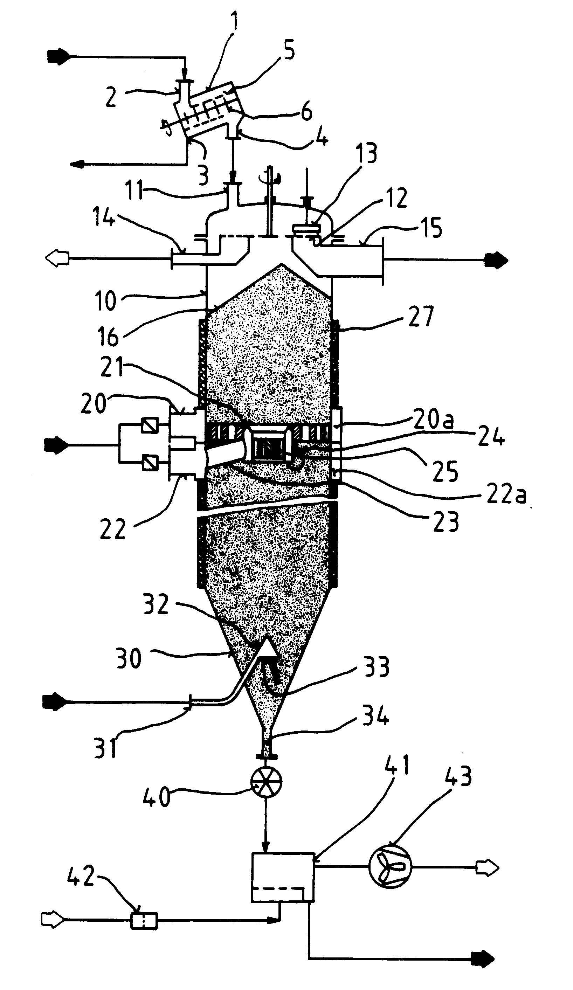

Im folgenden wird die Erfindung anhand einer in der Zeichnung schematisch dargestellten Vorrichtung zur Durchführung des vorgenannten Verfahrens näher erläutert.

Im wesentlichen besteht die Vorrichtung aus einer Siebeinrichtung (1) oberhalb eines Schachttrockners (10), dem Schachttrockner mit Siebring (12), Zuführungen (20, 22) für das Inertgas, Konus (30) und einer Austragsvorrichtung (40) sowie aus einem Wirbelbettkühler (41).

Das Granulat-Wassergemisch wird bei (2) der Siebeinrichtung zugeführt und mit Hilfe einer Paddelschnecke (6) schräg nach oben in einem Siebrohr (5) gefördert. Das Förderwasser läuft am Stutzen (3) ab. Das Granulat fällt über den Stutzen (4) und den Aufgabestutzen (11) auf den drehbaren Siebring (12). Bei jeder Umdrehung des Siebringes wird das Granulat über zwei verschiedene Segmente des Siebrings erst über den Wasserablauf (14) entwässert, und dann mit Inertgas von oben nach unten durchströmt. Das Inertgas steigt in der Schüttung (16) im Schachttrockner auf, wird oberhalb des horizontalen Siebrings umgelenkt und über den unter dem Siebring angeordneten Gassammelraum und den Ablauf (15) weggeführt.

Das Granulat wird mit dem Abstreifer (13) radial nach innen auf die Schüttung im Schachttrockner abgeworfen.

Der Mantel des Schachttrockners ist wärmeisoliert. Die Isolierung (27) ist im oberen Bereich unterbrochen durch zwei ringförmig um die Zylinderwand gelegte, übereinander angeordnete Zuführungen (20) und (22) für das Inertgas. Durch die obere Zuführung (20) wird das Gas in eine Ringleitung (20a) geführt und durch rechteckige Durchlässe (21), die gleichmäßig an der Zylinderwand verteilt sind, radial nach innen in die Granulatschüttung geleitet. Die freie Fläche der Durchlässe entspricht weniger als dem 0,7-fachen des freien Querschnitts der Zuführung (20). Durch die untere Zuführung (22) wird Inertgas über die Ringleitung (22a) in einen zentral in der Schüttung angeordneten Verteilerring (24) geleitet. Dieser ist mit Rohren (23) an der inneren Zylinderwand des Schachttrockners (10) abgestützt. Durch die Rohre gelangt das Inertgas in einen Verteilerring (24) und dann radial nach außen und nach innen in die Granulatschüttung. Der innere Ringdurchmesser des Verteilerrings beträgt etwa 1/3 des inneren Durchmessers des Schachttrockners und die Ringdicke beträgt etwa 1/3 des inneren Ringdurchmessers. Die Höhe des Verteilerringes beträgt etwa das 2,5-fache der Ringdicke. Der Verteilerring (24) ist oben dachförmig abgesetzt. Innerer und äußerer Mantel des Verteilerringes sind ebenfalls mit rechteckigen Durchlässen (25) versehen, deren freie Flächen insgesamt um mehr als den Faktor 0,7 kleiner sind als der freie Querschnitt der Zuleitung (22).

Die Behandlungszone des Schachttrockners zum Trocknen und Tempern hat einen Durchmesser > 1m, eine Höhe < 18 m und ein Höhen-Durchmesserverhältnis von 6 bis 15.

An die Behandlungszone schließt sich unten ein schlanker Konus (30) an, wobei sich Neigungswinkel < 45°, vorzugsweise Neigungswinkel < 25°, bewährt haben. Der Durchmesser des Austragstutzen (34) ist vom Massenstrom des Granulats abhängig und beträgt im allgemeinen mehr als 100 mm. Im Konus ist zentral etwa auf seiner halben Länge ein Kegel (32) mit Spitze nach oben angeordnet. Dem Kegel wird über eine weitere Zuführung (31) Inertgas zugeführt und über die Siebfläche (33) verteilt. In bevorzugter Ausführung ist der Öffnungswinkel des Kegels (32) kleiner als 60° und sein Durchmesser beträgt etwa 40 % des dortigen Konusdurchmessers. Der Austrag des Granulates erfolgt kontinuierlich durch Schleusen, wobei der Massenstrom in Abhängigkeit vom Stand im Schachttrockner geregelt werden kann. Im sich daran anschließenden Wirbelbettkühler (41) wird das Granulat auf einem geneigten Siebblech abgelagert, durch welches Luft über Filter (42), und Ventilator (43) gesaugt wird.

Das Verfahren wird im folgenden Beispiel veranschaulicht:
Einer Vorrichtung entsprechend der Zeichnung werden 1 700 kg/h extrahiertes Polyamid 6-Granulat - Granulatgröße 2,5 mm Φ x 2,5 mm; Viskositätszahl 170 - zusammen mit der fünffachen Wassermenge zugeführt. Das Granulat wird in der Siebeinrichtung (1) von der Hauptmenge des Wassers getrennt und gelangt mit einem Wasseranteil von 0,25 kg Wasser/kg Polymer und mit einer Temperatur von 98°C auf den Siebring (12) im Kopf des Schachttrockners (10). Mit Hilfe des Siebrings werden ca. 120 kg Wasser/h abgeschieden. Das Granulat fällt mit einem Anteil von 0,160 kg Wasser/kg Polymer auf den Schüttkegel in der Trocknungszone des Schachttrockners. Durch die beiden Zuführungen (20) und (22) werden insgesamt 7 100 kg/h Stickstoff mit einer Temperatur von 160°C und mit einer relativen Feuchte von 0,69% bzw. mit einem Wassergehalt von 0,024 kg Wasser/kg N₂ zugeführt. Die Teilströme durch die Zuführungen (20), (22) sind etwa gleich groß. Über die Zuführung (31) im Konus des Schachttrockners werden 75 kg/h trockener Stickstoff mit Temperaturen von 10°C bis 30°C zugeführt. Die Sinkgeschwindigkeit des Granulats im Schachttrockner beträgt etwa 0,45 m/h, die Aufstiegsgeschwindigkeit des Stickstoffs im Granulat 0,4 m/s und der spezifische Stickstoffstrom 4,7 kg N₂/kg Polymer. Das Gas strömt wassergesättigt mit einer Temperatur von 55°C und einem Druck von 1,2 bar über den Stutzen (15) ab. Bei Verweilzeiten von 6 h in der Trocknungszone und von 35 h in der Temperzone erhält man am unteren Ausgang 1520 kg/h Polyamidgranulat mit einem Restwassergehalt von 0,0003 kg Wasser/kg Polymer. Die Temperatur des Granulats beträgt 160°C, seine Viskositätszahl 251. Das Granulat wird anschließend im Wirbelbettkühler (41) bei einem Druck von 980 mbar auf eine mittlere Temperatur von 50°C gekühlt. Hierzu werden 10 000 kg Luft/h durch den Wirbelbettkühler gefördert.

## Patentansprüche

1. Verfahren zum Trocknen und Tempern von Polyamidgranulat, bei dem man das als Aufschlämmung in Wasser vorliegende Granulat von der Hauptmenge des Wassers trennt, das Granulat in einem Schachttrockner in einer Schicht ablagert und in einer Pfropfenströmung unter Einwirkung der Schwerkraft und eines im Gegenstrom geführten Inertgasstromes einer Temperatur von 70 bis 200°C vom restlichen Wasser befreit und tempert, dadurch gekennzeichnet, daß am Eintritt des Inertgases in den Schachttrockner zwischen Trocknungszone und Temperzone eine Teilung des Inertgasstromes mit einem Teilstrom radial nach innen in die Granulatschicht nach deren Überführung in die Pfropfenströmung und mit einem anderen Teilstrom radial nach außen und nach innen in die Granulatschicht erfolgt und daß in den unteren, konisch verjüngten Bereich des Schachttrockners ein weiterer Inertgasstrom eingeleitet wird.

2. Verfahren nach Anspruch 1, dadurch gekennzeichnet, daß das Granulat nach dem Austrag aus dem Schachttrockner in einem Wirbelbett mittels Luft auf eine Temperatur <50°C gekühlt wird.

3. Vorrichtung zur Durchführung des Verfahrens nach Anspruch 1 mit einer Einrichtung zum Abtrennen des Granulats aus einer Aufschlämmung in Wasser und einem nachgeschalteten stehenden, zylinderförmigen Schachttrockner, der einen obenliegenden Einlaß und einen untenliegenden Auslaß für das Granulat sowie Zuführungen für das Inertgas aufweist, gekennzeichnet durch zwei an der Zylinderwand des Schachttrockners (10) angebrachte Inertgas-Zuführungen (20) und (22), von denen die Zuführung (20) in eine Ringleitung (20a) mündet, die mehrere Durchlässe (21) durch die Zylinderwand hat, und die Zuführung (22), die mit einem Verteilerring (24) im Schachttrockner verbunden ist, sowie eine Inertgas-Zuführung (31) in den schlanken Konus (30) des Schachttrockners, welche auf einen zentralen, sich zum Auslaß (34) für das Granulat öffnenden Kegel (32) geführt ist.

4. Vorrichtung nach Anspruch 3, dadurch gekennzeichnet, daß dem Schachttrockner (10) ein Wirbelkühler (41) nachgeschaltet ist.

## Claims

1. A process for drying and heating polyamide granules in which a suspension of the granules in water is freed of the bulk of the water and the granules are deposited in bed form in a tower dryer and while moving in plug flow under the force of gravity are freed of the remaining water, and heat-treated, by a countercurrent inert gas stream at from 70 to 200°C, which comprises dividing the inert gas stream on entry into the tower dryer at a point between the drying zone and the heating zone into a stream which passes radially inward into the bed of granules in plug flow on the one hand and into a stream which flows radially outward and inward into the bed of granules on the other and passing a further stream of inert gas into the lower, conically tapered area of the tower dryer.

2. A process as claimed in claim 1, wherein the granules, after discharge from the tower dryer, are cooled in a fluidized bed with air at <50°C.

3. Apparatus for carrying out a process as claimed in claim 1, comprising a means for separating the granules from a suspension in water and a downstream upright cylindrical tower dryer which possesses an inlet at the top and an outlet at the bottom for the granules and feed lines for the inert gas, exhibiting two inert gas supply lines (20) and (22) which are mounted on the cylinder wall of the tower dryer (10) and of which the supply line (20) ends in a ring line (20a) which has a plurality of inlets (21) through the cylinder wall, and the supply line (22) which communicates with a distributor ring (24) in the tower dryer, and also an inert gas supply line (31) into the narrow-tapered conical bin (30) of the tower dryer, ending in a central conical formation (32) which opens out in the direction of the outlet (34) for the granules.

4. Apparatus as claimed in claim 3, wherein the tower dryer (10) is followed by a fluidized bed cooler (41).

## Revendications

1. Procédé de séchage et de recuit de granulés de polyamide dans lequel on sépare les granulés, se trouvant en suspension dans de l'eau, de la majeure partie de l'eau, on les dépose en une couche dans un séchoir vertical et, en un écoulement tampon, sous l'action de la pesanteur et d'un courant de gaz inerte à contre-courant d'une température de 70 à 200 degrés C, on les débarrasse de l'eau restante et on les recuit, caractérisé par le fait qu'à l'entrée du gaz inerte dans le séchoir vertical entre la zone de séchage et la zone de recuit a lieu une division du courant de gaz inerte avec un courant partiel dirigé radialement vers l'intérieur entrant dans la couche de granulés après le transfert de celle-ci dans l'écoulement tampon et un autre courant partiel dirigé radialement vers l'extérieur et vers l'intérieur entrant dans la couche de granulés, et que dans la zone inférieure diminuant coniquement du séchoir vertical est introduit un autre courant de gaz inerte.

2. Procédé selon la revendication 1, caractérisé par le fait que les granulés, après extraction du séchoir vertical, sont refroidis à une température inférieure à 50 degrés C au moyen d'air dans un lit fluidifié.

3. Appareil pour la mise en oeuvre du procédé selon la revendication 1, comportant un dispositif de séparation des granulés d'une suspension dans de l'eau et un séchoir cylindrique vertical monté en aval qui présente une entrée située en haut et une sortie située en bas pour les granulés et des amenées de gaz inerte, caractérisé par deux amenées de gaz inerte (20, 22) montées sur la paroi cylindrique du séchoir vertical (10) dont l'une (20) débouche dans une conduite circulaire (20a) qui a plusieurs passages (21) à travers la paroi cylindrique et l'autre (22) est reliée à un anneau distributeur (24) situé dans le séchoir vertical, et une amenée de gaz inerte (31) qui entre dans le cône effilé (30) du séchoir vertical et va à un cône central (32) s'ouvrant vers la sortie (34) des granulés.

4. Appareil selon la revendication 3, caractérisé par le fait qu'en aval du séchoir vertical (10) est monté un ensemble de fluidisation.
